# EUROPEAN PATENT SPECIFICATION

(11) **EP 0 545 570 B1**
(45) Date of publication and mention of the grant of the patent: **21.02.1996**
(21) Application number: 92310450.9
(22) Date of filing: 16.11.1992
(51) Int. Cl.: F16F 1/40, E04H 9/02

(54) **Vibration control devices for structures, using laminated rubber**
Vorrichtungen zur Schwingungskontrolle bei Strukturen unter Anwendung von Gummilaminaten
Dispositifs pour contrôler des vibrations de structures en utilisant du caoutchouc en lamelles

(30) Priority: 15.11.1991 JP 300408/91
(43) Date of publication of application: 09.06.1993
(73) Proprietor: KAJIMA CORPORATION, Tokyo 107 (JP)
(72) Inventor: Sakamoto, Mitsuo, c/o Kajima Corporation, Tokyo 107 (JP); Koshika, Norihide, c/o Kajima Corporation, Tokyo 107 (JP); Nishimura, Isao, c/o Kajima Corporation, Tokyo 107 (JP); Sasaki, Katsuyasu, c/o Kajima Corporation, Tokyo 107 (JP); Oorui, Satoshi, c/o Kajima Corporation, Tokyo 107 (JP)
(74) Representative: Godwin, Edgar James

(56) References cited:
- EP-A- 0 411 876
- EP-A- 0 419 057
- BE-A- 648 388
- DE-A- 2 738 168
- DE-B- 1 264 876
- FR-A- 762 631
- FR-A- 1 534 995
- US-A- 4 901 486

## Description

This invention relates to a laminated rubber used in a vibration control device such as a dynamic damper for controlling the vibration of a structure.

As a base isolation structure for trying to reduce each earthquake input into a superstructure or the like, a variety of structures using a laminated rubber support have conventionally been developed [Newly Opened Model Facilities "Base Isolation Buildings" are now on stage (refer to the Nikkei Architecture, the issue of July 14, 1986, pp.54-75)]. Of all conventional laminated rubber supports, the most general item is given by superposing each steel plate on each rubber in an alternate manner and providing connection plates installed to a superstructure or a lower structure such as a foundation at upper and lower portions of the superposition. Furthermore, there are laminated rubber supports in which high damping rubbers are used or lead plug dampers are contained.

Conventionally, a solid laminated rubber used in a base isolation structure gives a deformation ability in a same degree with that in a height thereof, but a diameter thereof has to be made very small in order to reduce shearing stiffness. Therefore, it has been difficult to complete both large deformation and low shearing stiffness at a same time.

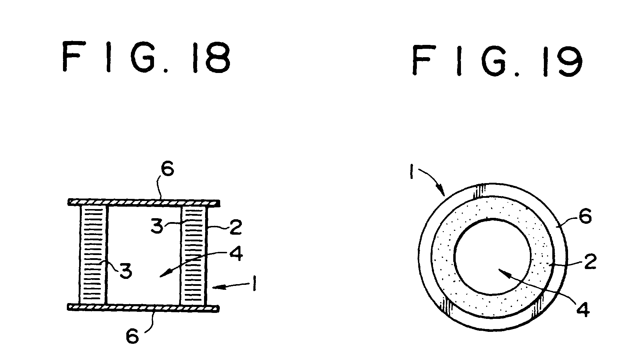

As shown in Figs. 18 and 19, it has been considered to try to reduce shearing stiffness and to develop deformation ability by forming a laminated rubber 1 in a ring shape and making an internal portion thereof hollow. In this case, a laminated rubber having a long period and a small shearing stiffness becomes possible. There is, however, a problem that the resulting buckling strength is reduced due to the hollowness.

Furthermore, a mechanism is known which completes a laminated rubber support having a large deformation ability and a low shearing stiffness by connecting the laminated rubbers of a small element, which are obtained by miniaturizing usual laminated rubbers, to each other in multistage through upper and lower connection plates. There is, however, another problem that the number of the elements become too many.

With reference to the uses other than the base isolation structures, it can be considered to utilize laminated rubbers, e.g., as a spring element in a passive type vibration control device (designated as DD thereafter) such as a dynamic damper, as a spring element or a supporting device in an active type vibration control device for actively controlling the vibration of a structure by applying control force such as oil pressure due to an actuator and electromagnetic force or the like. In these vibration control devices, normally, the natural period of a spring is synchronized with the natural period of a structure or it is set to be period longer than the natural period of the structure (e.g., in case of using the vibration control device as a supporting device). A large stroke becomes necessary for getting a large seismic response control effect by a compact device. For example, an active type vibration control device disclosed in Japanese Pat. Laid-open No. 1275866 is constituted by suspending a weight to support by use of a hanger material as a supporting device, instead of using a spring, and exciting the weight by means of an actuator in accordance with the response from a building against earthquake or the like. In the suspending mode, however, there is a problem that the resulting movement in a vertical direction is also enlarged accordingly as the stroke becomes larger. In addition, when the natural period of a structure as a seismic response control object becomes longer, it will, be hard to use the laminated rubbers having the period matching to such a constitution as described above. Furthermore, in case of vibrating the weight by means of the actuator as described in the active type vibration control device, there is still a further problem that the vibration due to the drive is transmitted to the structure, resulting in the transmission of noise and uncomfortable vibration in the neighborhood of the floor installed with the vibration control device as well.

In one aspect the invention is concerned with a combination as defined by the preamble of each of claims 1 and 2.

In another aspect the invention is concerned with a combination as defined by the preamble of each of claims 3 and 4.

In a further aspect the invention is concerned with a combination as defined by the preamble of each of claims 7 and 8.

Such combinations are disclosed in JP-A-63-156171. The present invention is defined by the independent claims 1 to 4, 7, and 8.

With the width of the laminated rubber spread to the inside or outside towards both vertical ends and a large bending moment thereof in the installation state, the buckling strength of the laminated rubber is increased to fully make use of the deformation ability of the hollow laminated rubber.

The projections in a vertical direction plays a stiffening rib's role on the buckling of the laminated rubber to fully make use of the deformation ability of the hollow laminated rubber.

Normally, horizontal connection plates made of steel plates or the like are mounted on the upper and lower portions of these laminated rubbers, and the installation of the laminated rubbers can be done by jointing the laminated rubbers to upper and lower structure bodies with bolts by use of the connection plates.

Furthermore, the steel plates in the laminated rubber can be ring-shaped steel plates. By use of disk-type steel plates, without making the steel plates in a ring form, it is also possible to divide the internal hollow portion of the laminated rubber. In the case of using the disk-type steel plates, any local deformations are hardly produced and the resulting laminated rubber is more stable against an overturning moment or the like, in comparison with the case where the steel plate is formed in a ring shape.

A vibration control device of the present invention uses the laminated rubber of a non-uniform section type or of a projection type described above as a spring element in a passive or active type vibration control device.

In case of using the laminated rubber in DD, DD can be constituted by disposing the laminated rubber of a non-uniform section type or of a projection type (in a plural form) at a predetermined position of a structure as a seismic response control object and mounting an additional mass body of a predetermined mass m_{d} on the laminated rubber. It is considered that the mass m_{d} of the additional mass body is within the normal range of 1/50 to 1/100 of a mass mₗ of the structure. By use of the laminated rubber of a non-uniform section type or of a projection type, a spring (spring constant k_{d}) having a large deformation ability in a horizontal direction is formed at a long period corresponding to the natural period of the structure, and the spring can be applied to multi-storied buildings or the like.

As an active type vibration control device, for example, the following types can be listed.
(a) What intervenes an actuator for applying a control force u(t) corresponding to the vibration of the structure between the structure having a mass mₗ and the additional mass body having a predetermined mass m_{d} (designated as AMD thereafter).
(b) What intervenes a spring having a predetermined spring constant k_{d} between the structure and the additional mass body in the construction of above description (a) and synchronizes the period in case of freely vibrating the additional mass body with the natural period of the structure (designated as HMD thereafter).
(c) What has such a construction as DD is doubly overlapped on AMD or HMD (designated as DMD thereafter), i.e., what further provides a second additional mass body having a predetermined mass m_{b} for an additional mass body (i.e., a first additional mass body) having a predetermined mₐ and allows to act a control force u(t) between the first additional mass body and the second additional mass body in the construction of DD (refer to e.g., Japanese Pat. Laid-open No. 63-156171), further synchronizes the periods of the first additional mass body and the second additional mass body with the natural period of the structure using a spring (spring constant k_{b}).

Also in case of the active type vibration control device, the laminated rubbers (usually in a plural form) of a non-uniform section type or of a projection type are installed to a predetermined position of the structure as a seismic response control object and the additional mass body having the predetermined mass m_{d} (or mₐ) is mounted on the laminated rubbers in similar to the case of DD. In case of AMD, the laminated rubbers are used which support the additional mass body in a vertical direction, functionate as a spring for keeping a neutral position with respect to a horizontal direction, and should have a fully longer period than the natural period of the structure not so as to give any obstacles when the control force u(t) is acted.

HMD is arranged to cancel a part of an inertial force acting on the additional mass body by adding a term corresponding to the spring to the control force so that the additional mass body can be vibrated by a less control force. In this case, the period of the laminated rubber should be coincided with the natural period of the structure.

In addition, DMD also supports the first additional mass body by means of the laminated rubber (spring constant k_{d}) coincided with the natural period of the structure, and a large damping effect can be obtained by a small control force in case of adding the control force to the second additional mass body.

Furthermore, there are still noise and vibration problems when driven in the active type vibration control device utilizing the actuator. However, these noise and vibration problems in the neighborhood of the floor installed with the vibration control device are reduced since the additional mass body is supported by the laminated rubbers.

Accordingly, by use of the present invention it is possible to provide a laminated rubber having a high buckling strength and a large deformation ability by making a hollow laminated rubber, which has a small shearing stiffness and a long vibration period, in a non-uniform section in accordance with the bending moment distribution for acting the hollow laminated rubber and by forming projections in a vertical direction on the internal or external surface of the hollow laminated rubber.

By use of the present invention it is also possible to provide a vibration control device of a passive or active type which constructs a large spring element or a supporting device having a large stroke and a long period and is suitable to a structure having a long period such as a multi-storey building, by use of the hollow laminated rubbers of a non-uniform section type or of a projection type as described above.

It is also possible to provide a vibration control device which can reduce the influence of noise and vibration on the neighborhood of the floor installed with the vibration control device by supporting an additional mass body by using the above-described laminated rubbers as a spring element.

It is also possible to provide a vibration control device which is suitable to a structure having a small friction and a long period by using the above-described laminated rubbers.

It is also possible to provide a compact vibration control device having a simplified construction by using the above-described laminated rubbers as a spring element.

The foregoing and other features and advantages of the invention will become apparent from the following description with reference to the accompanying drawings, in which:
Fig. 1 is a vertical sectional view showing a laminated rubber of a non-uniform type ;
Fig. 2 is a horizontal sectional view showing the vertical center portion of the laminated rubber of Fig. 1;
Figs. 3 is a vertical sectional view showing another laminated rubber of a non-uniform section type;
Fig. 4 is a horizontal sectional view showing the vertical center portion of the laminated rubber of Fig. 3;
Fig. 5 is a vertical sectional view showing a further laminated rubber of a non-uniform section type;
Fig. 6 is a horizontal sectional view showing the vertical center portion of the laminated rubber of Fig. 5;
Fig. 7 is a horizontal sectional view showing the vertical center portion of the laminated rubber of Fig. 5 in case where the center portion is formed in a rectangular form;
Fig. 8 is a vertical sectional view showing a laminated rubber of a projection type;
Fig. 9 is a horizontal sectional view showing the vertical center portion of the laminated rubber of Fig. 8;
Fig. 10 is a vertical sectional view showing another laminated rubber of a projection type;
Fig. 11 is a horizontal sectional view showing the vertical center portion of the laminated rubber of Fig. 10;
Fig. 12 is a vertical sectional view showing a further laminated rubber of a projection type;
Fig. 13 is a horizontal sectional view showing the vertical center portion of the laminated rubber of Fig. 12;
Fig. 14 is a horizontal sectional view showing the vertical center portion of the laminated rubber of Fig. 12 in case where the center portion is formed in a rectangular form;
Fig. 15 is a schematic view showing a vibration control device of a structure as a preferred embodiment of the present invention;
Fig. 16 is a schematic view showing a vibration control device of a structure as another preferred embodiment of the present invention;
Fig. 17 is a schematic view showing a vibration control device of a structure as a further preferred embodiment of the present invention;
Fig. 18 is a vertical sectional view showing a hollow laminated rubber of prior art; and
Fig. 19 is a horizontal sectional view showing the vertical center portion of the laminated rubber of Fig. 18.

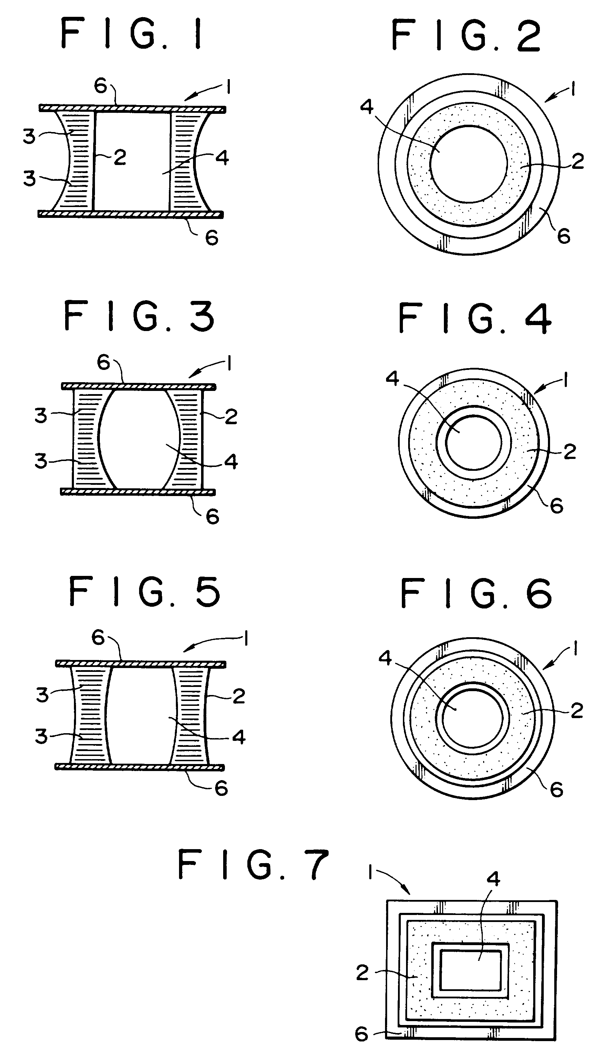

Figs. 1 through 7 show laminated rubbers of a non-uniform type suitable for use in the present invention. Figs. 1 and 2 show what forms a hollow laminated rubber 1 by horizontal embedding a plurality of ring-shaped steel plates 3 in a hollow rubber 2 formed in a ring shape to set the outside of the laminated rubber 1 as a non-uniform section. That is, the outside of the laminated rubber 1 is continuously spread from the vertical center portion to both vertical ends. Connection plates 6 made of steel plates or the like are monolithically installed to the upper and lower ends of the laminated rubber 1, and the connection plates 6 are jointed to a lower structural body and an upper or lower structural body when installed. In case when bolt holes (not shown) are formed in the connection plates, the connection plates 6 can be fixed to the lower structural body and the upper or lower structural body by bolted joint. Likewise, the inside of the laminated rubber 1 is formed as a non-uniform section in the preferred embodiment shown in Figs. 3 and 4. The inside and the outside of the laminated rubber 1 are formed as non-uniform sections in the preferred embodiment shown in Figs. 5 through 7. Figs. 1 through 6 show the cases where the outer shape of the laminated rubber 1 in the horizontal section is circular, but Fig. 7 shows a case where the outer shape of the laminated rubber 1 is rectangular. In case where the outer shape is circular, the shearing stiffness of the laminated rubbers are all the same. On the other hand, when the outer shape of the laminated rubber is made rectangular or elliptic, the shearing stiffness can be varied depending on the direction. For example, in case where the natural period of the structure as a base isolation or seismic response control object becomes largely different depending on the direction thereof, effective base isolation and seismic response control become possible by altering the shearing stiffness depending on the direction. Even with respect to the non-uniform section of the inside shown in Figs. 1 and 2 and the non-uniform section of the outside shown in Figs. 3 and 4, it is possible to make the outer shape of the laminated rubber 1 rectangular or elliptic to give the laminated rubber 1 having the directionality.

In an illustrated embodiment, the steel plates 3 in a ring shape are also embedded into the hollow rubber 2, but any disk-type steel plates with no hole may be used so as to divide the hollow portion 4 within the rubber 2 without using the ring-shaped steel plates. It may be considered to use all the disk-type steel plates instead of the steel plates in the laminated rubber 1, but disk-type steel plates may be used every several sheets between the ring-shaped steel plates. By intervening some disk-type steel plates, any local deformation are hardly made, and it may be considered that move stable construction will be obtained.

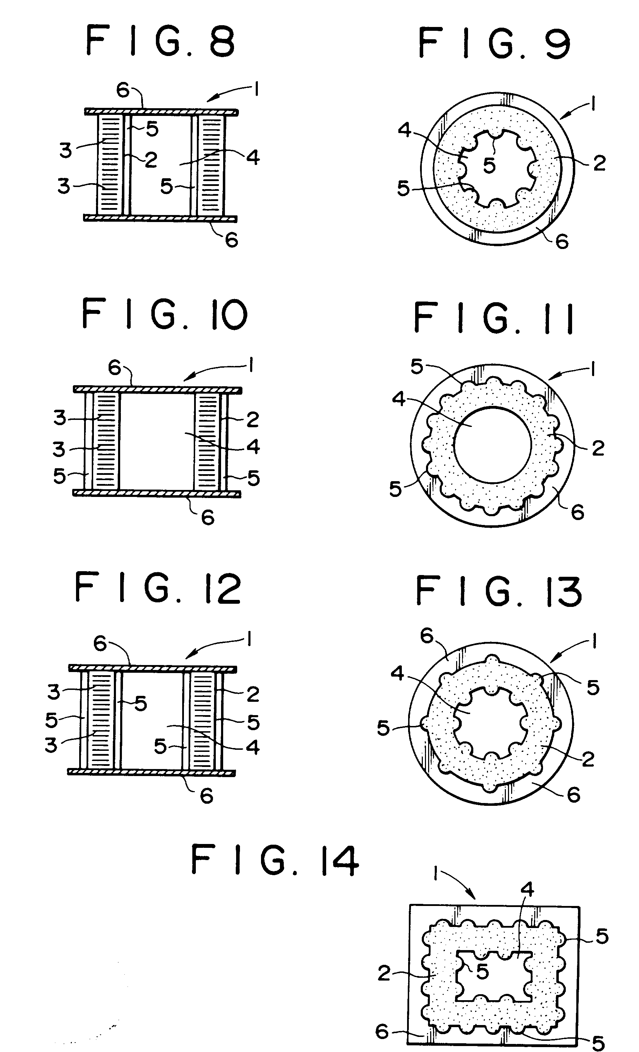

Figs. 8 through 14 show the preferred embodiments with reference to the laminated rubbers of a projection type, respectively.

The preferred embodiment in Figs. 8 and 9 is what forms a plurality of projections 5 in a vertical direction on the internal surface of the hollow laminated rubber 1, and the projections 5 in a vertical direction play a stiffening rib's role on the buckling of the hollow laminated rubber 1. By improving the buckling strength in this manner, it is possible to fully make use of the deformation ability of the hollow laminated rubber 1 having a small shearing stiffness. Likewise, a plurality of projections 5 are formed on the external surface of the laminated rubber 1 in the preferred embodiment shown in Figs. 10 and 11. In case of the preferred embodiment shown in Figs. 12 through 14, the projections 5 are formed on the internal and external surfaces of the laminated rubber. Figs. 8 through 13 shows the case where the outer shape of the laminated rubber 1 in a horizontal section is circular, and Fig. 14 shows the case where the outer shape is rectangular. In case of providing the projections 5 on the internal surface of the laminated rubber 1 shown in Figs. 8 and 9, and even in case of providing the projections 5 on the external surface of the laminated rubber 1 shown in Figs. 10 and 11, the laminated rubber 1 having the directionality can be prepared by making the outer shape of the laminated rubber 1 rectangular or elliptic. In similar to the case of the non-uniform section type shown in Figs. 1 through 7, the hollow portion 4 within the rubber 2 may be divided by using the disk-type steel plates with no hole, instead of the ring-shaped steel plates.

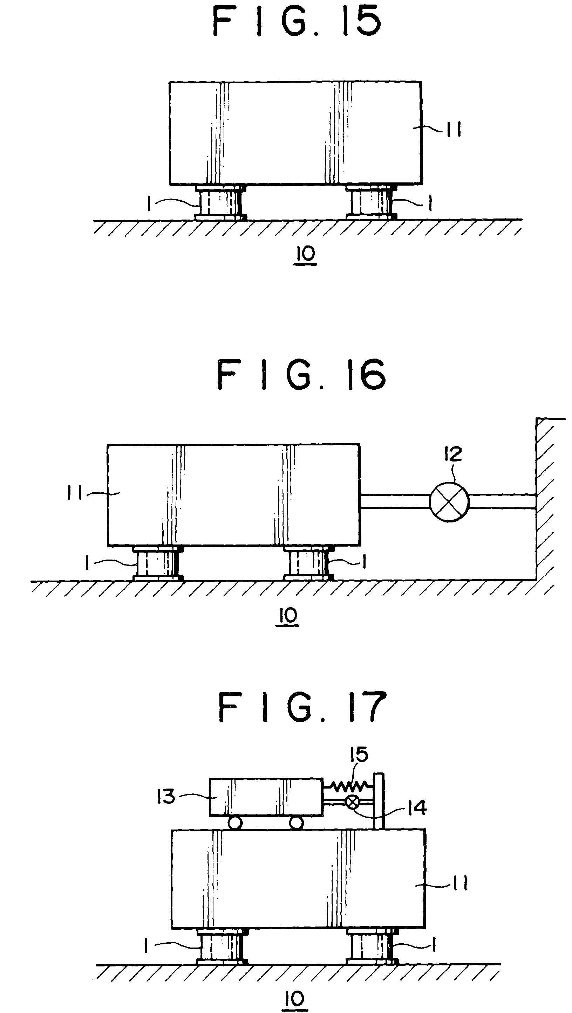

Figs. 15 through 17 show preferred embodiments of a vibration control device for a structure, in which the laminated rubbers are used, respectively.

Fig. 15 shows a preferred embodiment in case of DD, and an additional mass body 11 is supported through a plurality of laminated rubbers 1 on a structure 10. As for the laminated rubber, either the non-uniform section type or the projection type described above may be used.

In case a mass of the structure 10 on which the device is mounted is expressed as mₗ, a mass of the additional mass body 11 is expressed as m_{d}, a spring constant of the main body of the structure 10 is expressed as k₁, a spring constant of the laminated rubber 1 is expressed as k_{d}, and a damping coefficient is expressed as c_{d}, respectively, the intrinsic angular frequency of the structure 10 constructing a main vibration system is given by:${\text{ω}}_{\text{1}} {\text{= (k}}_{\text{1}} {\text{/ m}}_{\text{1}} {\text{)}}^{\text{1/2}}$

The mass m_{d} of the additional mass body 11 constructing a vibration absorption system is designed so that the ratio of the mass m_{d} to the mass m₁ of the structure 10 may be${\text{µ = m}}_{\text{d}} {\text{/ m}}_{\text{1}} \text{≧ 0.01}$ and at this time, the intrinsic angular frequency of the vibration absorption system is given by:${\text{ω}}_{\text{d}} {\text{= (1 / 1 + µ ) ω}}_{\text{1}}$

Then, the damping coefficient c_{d} and the damping factor h_{d} are expressed by:${\text{c}}_{\text{d}} {\text{= 2 m}}_{\text{d}} {\text{ω}}_{\text{d}} {\text{h}}_{\text{d}}$${\text{h}}_{\text{d}} {\text{= [3µ / 8 (1 +µ)]}}^{\text{1/2}}$

Fig. 16 shows the preferred embodiment in case of either AMD or HMD, a control force u(t) due to an oil pressure from an actuator 12 or an electromagnetic force or the like is applied to the additional mass body 11 placed on the laminated rubbers 1 to actively control the vibration of the structure.

In AMD, the spring (laminated rubber 1) between the main body of the structure 10 and the additional mass body 11 constructing the vibration control device is kept in a soft state, e.g.,${\text{ω}}_{\text{d}} {\text{≦ (1 / 2) ω}}_{\text{1}}$ and then, the control force u(t) is given in the form of a following equation, e.g.,${\text{u(t) = G}}_{\text{1}} {\text{(dx}}_{\text{1}} {\text{/dt) + G}}_{\text{2}} {\text{(dx}}_{\text{d}} \text{/dt)}$

Wherein x₁ is a displacement of the structure 10 and x_{d} is a displacement of a first additional mass body. G₁ shows a gain in a circuit including an AGC circuit or the like to the response speed of the structure, and the correspondences from a large input to a small input are attained. Furthermore, the second term in the above equation gives a damping property to the additional mass body side by adding a product resulting from multiplying a gain G₂ (minus sign) by the vibration speed of the additional mass body side to the control force and more stabilization is attained.

In case of HMD, the spring constant k_{d} is set so that the vibration of the additional mass body 11 may be synchronized with the vibration of the structure 10, that is:${\text{ω}}_{\text{d}} {\text{= ω}}_{\text{1}}$ and the control force u(t) is given in the form of a following equation, e.g.,${\text{u(t) = G}}_{\text{1}} {\text{(dx}}_{\text{1}} {\text{/dt) + G}}_{\text{2}} {\text{(dx}}_{\text{d}} {\text{/dt) + G}}_{\text{3}} {\text{(x}}_{\text{1}} {\text{-x}}_{\text{d}} \text{)}$ wherein G₃ is a gain having a minus sign and a part of the inertial force acting on the additional mass body 11 at the vibration time is canceled by the third term of the above equation so as to allow the additional mass body 11 to vibrate by a small control force.

Fig. 17 shows a preferred embodiment in case of DMD. A second additional mass body 13 having a predetermined mass m_{b} is further provided to the additional mass body 11 having the predetermined mass mₐ and the control force u(t) is added by an actuator 14 between the first additional mass body 11 and the second additional mass body 13 to actively control the vibration of the structure. DMD corresponds to what doubly constructs DD and either AMD or HMD, and a large vibration control effect can be obtained by a small control force. In such a construction, the application to the structure having a long period is possible by supporting the additional mass body 11 by means of the laminated rubber 1 either of a non-uniform section type or of a projection type, and since the deformation ability is also large, the resulting vibration control can be done effectively.

## Claims

1. A combination comprising a structure (10), an additional mass body (11) and a spring (1), the additional mass body (11) and the spring (1) constituting a vibration control device for the structure (10) in the form of a dynamic damper, in which the additional mass body (11) having a predetermined mass (m_{d}) as a vibration absorption system is connected to the structure (10) having a known mass (m₁) for constructing a main vibration system by way of the spring (1), which has a predetermined spring constant (k_{d}) and which has a period synchronizing with the natural period of the main vibration system,
characterised in that:
(a) the spring (1) comprises a laminated rubber (1) formed by laminating ring-shaped rubbers and a plurality of steel plates (3) alternately in a vertical direction so as to make an internal portion (4) of the laminated rubber (1) hollow, at least one of the inside and the outside of the laminated rubber being made to be a non-uniform section in a vertical direction so that the width in a horizontal section gradually increases from the vertical central portion to both vertical ends,
(b) the laminated rubber constituting the said spring (1) is installed at a predetermined position on the structure (10); and
(c) the additional mass body (11) is mounted on the laminated rubber (1).

2. A combination comprising a structure (10), an additional mass body (11) and a spring (1), the additional body (11) and the spring (1) constituting a vibration control device for the structure (10) in the form of a dynamic damper, in which the additional mass body (11) having a predetermined mass (m_{d}) as a vibration absorption system is connected to the structure (10) having a known mass (m₁) for constructing a main vibration system by way of the spring (1), which has a predetermined spring constant (k_{d}) and which has a period synchronizing with the natural period of the main vibration system,
characterised in that:
(a) the spring (1) comprises a laminated rubber (1) formed by laminating ring-shaped rubbers and a plurality of steel plates (3) alternately in a vertical direction so as to make an internal portion (4) of the laminated rubber (1) hollow, the laminated rubber (1) having a plurality of radial rubber projections (5) extending in a vertical direction and formed on at least one of the internal and external surfaces of the laminated rubber (1);
(b) the laminated rubber constituting the said spring (1) is installed at a predetermined position on the structure (10); and
(c) the additional mass body (11) is mounted on the laminated rubber (1).

3. A combination comprising a structure (10), an additional mass body (11), a spring (1), and an actuator (12), the additional mass body (11), the spring (1) and the actuator (12) constituting an active type vibration control device for the structure (10), in which control device the actuator (12) for applying a control force (u(t)) corresponding to the vibration of the structure (10) having a known mass (m₁) is intervened between the structure (10) and the additional mass body (11) having a predetermined mass (m_{d}),
characterised in that:
(a) the spring (1) comprises a laminated rubber (1) formed by laminating ring-shaped rubbers and a plurality of steel plates (3) alternately in a vertical direction so as to make an internal portion (4) of the laminated rubber (1) hollow, at least one of the inside and the outside of the laminated rubber (1) being made to be a non-uniform section in a vertical direction so that the width in a horizontal section gradually increases from the vertical central portion to both vertical ends;
(b) the laminated rubber constituting the said spring (1) is installed at a predetermined position on the structure (10); and
(c) the additional mass body (11) is mounted on the laminated rubber (1).

4. A combination comprising a structure (10), an additional mass body (11), a spring (1), and an actuator (12), the additional mass body (11), the spring (1) and the actuator (12) constituting an active type vibration control device for the structure (10), in which control device the actuator (12) for applying a control force (u(t)) corresponding to the vibration of the structure (10) having a known mass (m₁) is intervened between the structure (10) and the additional mass body (11) having a predetermined mass (m_{d}),
characterised in that:
(a) the spring (1) comprising a laminated rubber (1) formed by laminating ring-shaped rubbers and a plurality of steel plates (3) alternately in a vertical direction so as to make an internal portion (4) of the laminated rubber (1) hollow, the laminated rubber (1) having a plurality of radial rubber projections (5) extending in a vertical direction and formed on at least one of the internal and external surfaces of the laminated rubber (1);
(b) the laminated rubber constituting the said spring (1) is installed at a predetermined position on the structure (10); and
(c) the additional mass body (11) is mounted on the laminated rubber (1).

5. A combination as claimed in claim 3 or 4, wherein the period of the laminated rubber (1) is set so as to be fully longer than the natural period of the structure (10).

6. A combination as claimed in claim 3 or 4, wherein the period of the laminated rubber (1) is set so as to synchronize with the natural period of the structure (10).

7. A combination comprising a structure (10), a first additional mass body (11), a second additional mass body (13) movably mounted on the first additional mass body (11), a spring (1) and an actuator (14), the additional mass bodies (11,13), the spring (1) and the actuator (14) constituting an active type vibration control device for the structure (10), in which control device the actuator (14) for applying a control force (u(t)) corresponding to the vibration of the structure (10) having a known mass (m₁) is intervened between the first additional mass body (11) having a predetermined mass (mₐ) and the second additional mass body (13) having a predetermined mass (m_{b}),
characterised in that:
(a) the spring (1) comprises a laminated rubber (1) formed by laminating ring-shaped rubbers and a plurality of steel plates (3) alternately in a vertical direction so as to make an internal portion (4) of the laminated rubber (1) hollow, at least one of the inside and the outside of the laminated rubber (1) being made to be a non-uniform section in a vertical direction so that the width in a horizontal section gradually increases from the vertical central portion to both vertical ends;
(b) the laminated rubber constituting the said spring (1) is installed at a predetermined position on the structure (10); and
(c) the first additional mass body (11) is mounted on the laminated rubber (1).

8. A combination comprising a structure (10), a first additional mass body (11), a second additional mass body (13) mounted on the first additional mass body (11), a spring (1) and an actuator (14), the additional mass bodies (11,13), the spring (1) and the actuator (14) constituting an active type vibration control device for the structure (10), in which control device the actuator (14) for applying a control force (u(t)) corresponding to the vibration of the structure (10) having a known mass (m₁) is intervened between the first additional mass body (11) having a predetermined mass (mₐ) and the second additional mass body (13) having a predetermined mass (m_{b}),
characterised in that:
(a) the spring (1) comprising a laminated rubber (1) formed by laminating ring-shaped rubbers and a plurality of steel plates (3) alternately in a vertical direction so as to make an internal portion (4) of the laminated rubber (1) hollow, the laminated rubber (1) having a plurality of radial rubber projections (5) extending in a vertical direction and formed on at least one of the internal and external surfaces of the laminated rubber (1);
(b) the laminated rubber constituting the said spring (1) is installed at a predetermined position on the structure (10); and
(c) the first additional mass body (11) is mounted on the laminated rubber (1).

9. A combination as claimed in any preceding claim, wherein a plurality of the steel plates (3) are ring shaped.

## Patentansprüche

1. Kombination, die eine Struktur (10), einen zusätzlichen Massekörper (11), und eine Feder (1) aufweist, wobei der zusätzliche Massekörper (11) und die Feder (1) eine Schwingungssteuervorrichtung für die Struktur (10) in Form eines dynamischen Dämpfers darstellen, bei der der zusätzliche Massekörper (11), der eine vorgegebene Masse (m_{d}) hat, als Schwingungsabsorptionssystem mit der Struktur (10), die eine bekannte Masse (m₁) hat, über die Feder (1), die eine vorgegebene Federkonstante (k_{d}) hat, und die eine mit der Eigenperiode des Hauptschwingungssystems übereinstimmende Periode hat, verbunden ist, um ein Hauptschwingungssystem zu bilden,
dadurch gekennzeichnet, daß:
(a) die Feder (1) ein Gummilaminat (1) aufweist, das durch abwechselndes Laminieren, in der vertikalen Richtung, von ringförmigen Gummis und einer Vielzahl von Stahlplatten (3) so gebildet wurde, daß ein innerer Bereich (4) des Gummilaminats (1) hohl ist, wobei mindestens die innere oder äußere Seite des Gummilaminats in der vertikalen Richtung einen ungleichmäßigen Schnitt hat, wobei die Breite in einem horizontalen Schnitt von dem vertikalen mittleren Bereich bis zu beiden vertikalen Enden allmählich zunimmt;
(b) das Gummilaminat, das die Feder (1) bildet, bei einer vorgegebenen Position auf der Struktur (10) angebracht ist; und
(c) der zusätzliche Massekörper (11) auf dem Gummilaminat (1) befestigt ist.

2. Kombination, die eine Struktur (10), einen zusätzlichen Massekörper (11), und eine Feder (1) aufweist, wobei der zusätzliche Massekörper (11) und die Feder (1) eine Schwingungssteuervorrichtung für die Struktur (10) in Form eines dynamischen Dämpfers darstellen, bei der der zusätzliche Massekörper (11), der eine vorgegebene Masse (m_{d}) hat, als Schwingungsabsorptionssystem mit der Struktur (10), die eine bekannte Masse (m₁) hat, verbunden ist, um mittels der Feder (1), die eine vorgegebene Federkonstante (k_{d}) hat, und die eine mit der Eigenperiode des Hauptschwingungssystems übereinstimmende Periode hat, ein Hauptschwingungssystem zu bilden.
dadurch gekennzeichnet, daß:
(a) die Feder (1) ein Gummilaminat (1) aufweist, das durch abwechselndes Laminieren, in der vertikalen Richtung, von ringförmigen Gummis und einer Vielzahl von Stahlplatten (3) so gebildet wurde, daß ein innerer Bereich (4) des Gummilaminats (1) hohl ist, wobei das Gummilaminat (1) eine Vielzahl von radialen Gummivorsprüngen (5) hat, die sich in der vertikalen Richtung erstrecken und auf mindestens der inneren oder äußeren Oberfläche des Gummilaminats (1) gebildet sind;
(b) das Gummilaminat, das die Feder (1) bildet, bei einer vorgegebenen Position auf der Struktur (10) angebracht ist; und
(c) der zusätzliche Massekörper (11) auf dem Gummilaminat (1) befestigt ist.

3. Kombination, die eine Struktur (10), einen zusätzlichen Massekörper (11), eine Feder (1), und ein Betätigungsorgan (12) aufweist, wobei der zusätzliche Massekörper (11), die Feder (1) und das Betätigungsorgan (12) eine Schwingungssteuervorrichtung vom aktiven Typ für die Struktur (10) darstellen, wobei bei dieser Steuervorrichtung das Betätigungsorgan (12) zur Übertragung einer Steuerkraft (u(t)), die der Schwingung der Struktur (10) mit einer bekannten Masse (m₁) entspricht, zwischen der Struktur (10) und dem zusätzlichen Massekörper (11) mit einer vorgegebenen Masse (m_{d}) angeordnet ist,
dadurch gekennzeichnet, daß:
(a) die Feder (1) ein Gummilaminat (1) aufweist, das durch abwechselndes Laminieren, in der vertikalen Richtung, von ringförmigen Gummis und einer Vielzahl von Stahlplatten (3) so gebildet wurde, daß ein innerer Bereich (4) des Gummilaminats (1) hohl ist, wobei mindestens die innere oder äußere Seite des Gummilaminats (1) in der vertikalen Richtung einen ungleichmäßigen Schnitt hat, wobei die Breite in einem horizontalen Schnitt von dem vertikalen mittleren Bereich bis zu beiden vertikalen Enden allmählich zunimmt;
(b) das Gummilaminat, das die Feder (1) bildet, bei einer vorgegebenen Position auf der Struktur (10) angebracht ist; und
(c) der zusätzliche Massekörper (11) auf dem Gummilaminat (1) befestigt ist.

4. Kombination, die eine Struktur (10), einen zusätzlichen Massekörper (11), eine Feder (1), und ein Betätigungsorgan (12) aufweist, wobei der zusätzliche Massekörper (11), die Feder (1) und das Betätigungsorgan (12) eine Schwingungssteuervorrichtung vom aktiven Typ für die Struktur (10) darstellen, wobei bei dieser Steuervorrichtung das Betätigungsorgan (12) zur Übertragung einer Steuerkraft (u(t)), die der Schwingung der Struktur (10) mit einer bekannten Masse (m₁) entspricht, zwischen der Struktur (10) und dem zusätzlichen Massekörper (11) mit einer vorgegebenen Masse (m_{d}) angeordnet ist,
dadurch gekennzeichnet, daß:
(a) die Feder (1) ein Gummilaminat (1) aufweist, das durch abwechselndes Laminieren, in der vertikalen Richtung, von ringförmigen Gummis und einer Vielzahl von Stahlplatten (3) so gebildet wurde; daß ein innerer Bereich (4) des Gummilaminats (1) hohl ist, wobei das Gummilaminat (1) eine Vielzahl von radialen Gummivorsprüngen (5) hat, die sich in der vertikalen Richtung erstrecken und auf mindestens der inneren oder äußeren Oberfläche des Gummilaminats (1) gebildet sind;
(b) das Gummilaminat, das die Feder (1) bildet, bei einer vorgegebenen Position auf der Struktur (10) angebracht ist; und
(c) der zusätzliche Massekörper (11) auf dem Gummilaminat (1) befestigt ist.

5. Kombination gemäß Anspruch 3 oder 4, wobei die Periode des Gummilaminats (1) so eingestellt ist, daß sie wesentlich länger als die Eigenperiode der Struktur (10) ist.

6. Kombination gemäß Anspruch 3 oder 4, wobei die Periode des Gummilaminats (1) so eingestellt ist, daß sie mit der Eigenperiode der Struktur (10) übereinstimmt.

7. Kombination, die eine Struktur (10), einen ersten zusätzlichen Massekörper (11), einen zweiten zusätzlichen Massekörper (13), der auf dem ersten zusätzlichen Massekörper (11) beweglich angebracht ist, eine Feder (1), und ein Betätigungsorgan (14) aufweist, wobei die zusätzlichen Massekörper (11, 13), die Feder (1) und das Betätigungsorgan (14) eine Schwingungssteuervorrichtung vom aktiven Typ für die Struktur (10) darstellen, wobei bei dieser Steuervorrichtung das Betätigungsorgan (14) zur Übertragung einer Steuerkraft (u(t)), die der Schwingung der Struktur (10) mit einer bekannten Masse (m₁) entspricht, zwischen dem ersten zusätzlichen Massekörper (11) mit einer vorgegebenen Masse (mₐ) und dem zweiten zusätzlichen Massekörper (13) mit einer vorgegebenen Masse (m_{b}) angeordnet ist,
dadurch gekennzeichnet, daß:
(a) die Feder (1) ein Gummilaminat (1) aufweist, das durch abwechselndes Laminieren, in der vertikalen Richtung, von ringförmigen Gummis und einer Vielzahl von Stahlplatten (3) so gebildet wurde, daß ein innerer Bereich (4) des Gummilaminats (1) hohl ist, wobei mindestens die innere oder äußere Seite des Gummilaminats (1) in der vertikalen Richtung einen ungleichmäßigen Schnitt hat, und die Breite in einem horizontalen Schnitt von dem vertikalen mittleren Bereich bis zu beiden vertikalen Enden allmählich zunimmt;
(b) das Gummilaminat, das die Feder (1) bildet, bei einer vorgegebenen Position auf der Struktur (10) angebracht ist; und
(c) der erste zusätzliche Massekörper (11) auf dem Gummilaminat (1) befestigt ist.

8. Kombination, die eine Struktur (10), einen ersten zusätzlichen Massekörper (11), einen zweiten zusätzlichen Massekörper (13), der auf dem ersten zusätzlichen Massekörper (11) beweglich angebracht ist, eine Feder (1), und ein Betätigungsorgan (14) aufweist, wobei die zusätzlichen Massekörper (11, 13), die Feder (1) und das Betätigungsorgan (14) eine Schwingungssteuervorrichtung vom aktiven Typ für die Struktur (10) darstellen, wobei bei dieser Steuervorrichtung das Betätigungsorgan (14) zur Übertragung einer Steuerkraft (u(t)), die der Schwingung der Struktur (10) mit einer bekannten Masse (m₁) entspricht, zwischen dem ersten zusätzlichen Massekörper (11) mit einer vorgegebenen Masse (mₐ) und dem zweiten zusätzlichen Massekörper (13) mit einer vorgegebenen Masse (m_{b}) angeordnet ist,
dadurch gekennzeichnet, daß:
(a) die Feder (1) ein Gummilaminat (1) aufweist, das durch abwechselndes Laminieren, in der vertikalen Richtung, von ringförmigen Gummis und einer Vielzahl von Stahlplatten (3) so gebildet wurde, daß ein innerer Bereich (4) des Gummilaminats (1) hohl ist, wobei das Gummilaminat (1) eine Vielzahl von radialen Gummivorsprüngen (5) hat, die sich in der vertikalen Richtung erstrecken und auf mindestens der inneren oder äußeren Oberfläche des Gummilaminats (1) gebildet sind;
(b) das Gummilaminat, das die Feder (1) bildet, bei einer vorgegebenen Position auf der Struktur (10) angebracht ist; und
(c) der erste zusätzliche Massekörper (11) auf dem Gummilaminat (1) befestigt ist.

9. Kombination gemäß irgendeinem vorhergehenden Anspruch, wobei die Vielzahl der Stahlplatten (3) ringförmig ist.

## Revendications

1. Combinaison comprenant une structure (10), un corps de masse supplémentaire (11) et un ressort (1), le corps de masse supplémentaire (11) et le ressort (1) constituant un dispositif de contrôle des vibrations pour la structure (10) sous la forme d'un amortisseur dynamique, dans laquelle le corps de masse supplémentaire (11) ayant une masse prédéterminée (m_{d}) sous forme d'un système d'absorption des vibrations est connecté à la structure (10) ayant une masse connue (m₁) pour réaliser un système de vibration principal au moyen du ressort (1) qui a une constante élastique prédéterminée (k_{d}) et qui a une période en synchronisme avec la période naturelle du système de vibration principal,
caractérisée en ce que:
(a) le ressort (1) comprend un caoutchouc stratifié (1) obtenu en stratifiant des caoutchoucs de forme annulaire et plusieurs plaques d'acier (3) alternativement en direction verticale, de manière à rendre creuse une partie interne (4) du caoutchouc stratifié (1), au moins soit l'intérieur, soit l'extérieur du caoutchouc stratifié étant de section non uniforme en direction verticale, de façon que la largeur dans une section horizontale augmente graduellement depuis la partie centrale verticale vers les deux extrémités verticales;
(b) le caoutchouc stratifié constituant ledit ressort (1) est installé à une position prédéterminée sur la structure (10); et
(c) le corps de masse supplémentaire (11) est monté sur le caoutchouc stratifié (1).

2. Combinaison comprenant une structure (10), un corps de masse supplémentaire (11) et un ressort (1), le corps supplémentaire (11) et le ressort (1) constituant un-dispositif de contrôle des vibrations pour la structure (10) sous la forme d'un amortisseur dynamique, dans lequel le corps de masse supplémentaire (11) ayant une masse prédéterminée (m_{d}) sous forme de système d'absorption des vibrations est assemblé à la structure (10) ayant une masse connue (m₁) pour former un système de vibration principal au moyen du ressort (1) qui a une constante élastique prédéterminée (k_{d}) et qui a une période en synchronisme avec la période naturelle du système de vibration principal,
caractérisée en ce que:
(a) le ressort (1) comprend un caoutchouc stratifié (1) obtenu en stratifiant des caoutchoucs de forme annulaire et plusieurs plaques d'acier (3) alternativement en direction verticale, de manière à rendre creuse une partie interne (4) du caoutchouc stratifié (1), le caoutchouc stratifié (1) ayant plusieurs saillies radiales en caoutchouc (5) s'étendant en direction verticale et disposées sur au moins soit la surface interne, soit la surface externe du caoutchouc stratifié (1);
(b) le caoutchouc stratifié constituant ledit ressort (1) est installé à une position prédéterminée sur la structure (10): et
(c) le corps de masse supplémentaire (11) est monté sur le caoutchouc stratifié (1).

3. Combinaison comprenant une structure (10), un corps de masse supplémentaire (11), un ressort (1) et un actionneur (12), le corps de masse supplémentaire (11), le ressort (1) et l'actionneur (12) constituant un dispositif de contrôle des vibrations de type actif pour la structure (10) dans lequel dispositif de contrôle l'actionneur (12), pour appliquer une force de contrôle (u(t)) correspondant à la vibration de la structure (10) ayant une masse connue (m₁) est interposé entre la structure (10) et le corps de masse supplémentaire (11) ayant une masse prédéterminée (m_{d}),
caractérisée en ce que:
(a) le ressort (1) comprend un caoutchouc stratifié (1) obtenu en stratifiant les caoutchoucs de forme annulaire et plusieurs plaques d'acier (3) alternativement en direction verticale de manière à rendre creuse une partie interne (4) du caoutchouc stratifié (1) au moins soit l'intérieur soit l'extérieur du caoutchouc stratifié (1) présentant une section non uniforme en direction verticale de façon que la largeur, dans une section horizontale, augmente graduellement depuis la partie centrale verticale vers les deux extrémités verticales;
(b) le caoutchouc stratifié constituant ledit ressort (1) est installé à une position prédéterminée sur la structure (10); et
(c) le corps de masse supplémentaire (11) est monté sur le caoutchouc stratifié (1).

4. Combinaison comprenant une structure (10), un corps de masse supplémentaire (11), un ressort (1) et un actionneur (12), le corps de masse supplémentaire (11), le ressort (1) et l'actionneur (12) constituant un dispositif de contrôle des vibrations de type actif pour la structure (10), dans lequel dispositif de contrôle l'actionneur (12), pour appliquer une force de contrôle (u(t)) correspondant à la vibration de la structure (10) ayant une masse connue (m₁), est interposé entre la structure (10) et le corps de masse supplémentaire (11) ayant une masse prédéterminée (m_{d}),
caractérisée en ce que:
(a) le ressort (1) comprend un caoutchouc stratifié (1) obtenu en stratifiant des caoutchoucs de forme annulaire et plusieurs plaques d'acier (3) alternativement en direction verticale de manière à rendre creuse une partie interne (4) du caoutchouc stratifié (1), le caoutchouc stratifié (1) ayant plusieurs saillies radiales en caoutchouc (5) s'étendant en direction verticale et placées sur au moins soit la surface interne, soit la surface externe du caoutchouc stratifié (1);
(b) le caoutchouc stratifié constituant ledit ressort (1) est installé à une position prédéterminée sur la structure (10); et
(c) le corps de masse supplémentaire (11) est monté sur le caoutchouc stratifié (1).

5. Combinaison selon la revendication 3 ou 4, dans laquelle la période du caoutchouc stratifié (1) est choisie de manière à être nettement plus grande que la période naturelle de la structure (10).

6. Combinaison selon la revendication 3 ou 4, dans laquelle la période du caoutchouc stratifié (1) est choisie de manière à être en synchronisme avec la période naturelle de la structure (10).

7. Combinaison comprenant une structure (10), un premier corps de masse supplémentaire (11), un deuxième corps de masse supplémentaire (13) monté de manière mobile sur le premier corps de masse supplémentaire (11), un ressort (1) et un actionneur (14), les corps de masse supplémentaire (11, 13), le ressort (1) et l'actionneur (14) constituant un dispositif de contrôle des vibrations de type actif pour la structure (10), dans lequel dispositif de contrôle l'actionneur (14), pour appliquer une force de contrôle (u(t)) correspondant à la vibration de la structure (10) ayant une masse connue (m₁), est interposé entre le premier corps de masse supplémentaire (11) ayant une masse prédéterminée (mₐ) et le deuxième corps de masse supplémentaire (13) ayant une masse prédéterminée (m_{b}),
caractérisée en ce que:
(a) le ressort (1) comprend un caoutchouc stratifié (1) obtenu en stratifiant des caoutchoucs de forme annulaire et plusieurs plaques d'acier (3) alternativement en direction verticale de manière à rendre creuse une partie interne (4) du caoutchouc stratifié (1), au moins soit l'intérieur soit l'extérieur du caoutchouc stratifié (1) étant de section non uniforme en direction verticale, de façon que la largeur, dans une section horizontale, augmente graduellement depuis la partie centrale verticale vers les deux extrémités verticales;
(b) le caoutchouc stratifié constituant ledit ressort (1) est installé à une position prédéterminée sur la structure (10); et
(c) le corps de masse supplémentaire (11) est monté sur le caoutchouc stratifié (1).

8. Combinaison comprenant une structure (10), un premier corps de masse supplémentaire (11), un deuxième corps de masse supplémentaire (13) monté sur le premier corps de masse supplémentaire (11), un ressort (1) et un actionneur (14), les corps de masse supplémentaire (11, 13), le ressort (1) et l'actionneur (14) constituant un dispositif de contrôle des vibrations de type actif pour la structure (10), dans lequel dispositif de contrôle l'actionneur (14), pour appliquer une force de contrôle (u(t)) correspondant à la vibration de la structure (10) ayant une masse connue (m₁), est interposé entre le premier corps de masse supplémentaire (11) ayant une masse prédéterminée (mₐ) et le deuxième corps de masse supplémentaire (13) ayant une masse prédéterminée (m_{b}),
caractérisée en ce que:
(a) le ressort (1) comprend un caoutchouc stratifié (1) obtenu en stratifiant des caoutchoucs de forme annulaire et plusieurs plaques d'acier (3) alternativement en direction verticale de manière à rendre creuse une partie interne (4) du caoutchouc stratifié (1), le caoutchouc stratifié (1) ayant plusieurs saillies radiales en caoutchouc (5) s'étendant en direction verticale et placées sur au moins soit la surface interne, soit la surface externe du caoutchouc stratifié (1);
(b) le caoutchouc stratifié constituant ledit ressort (1) est installé à une position prédéterminée sur la structure (10); et
(c) le premier corps de masse supplémentaire (11) est monté sur le caoutchouc stratifié (1).

9. Combinaison selon l'une quelconque des revendications précédentes, dans laquelle plusieurs des plaques d'acier (3) ont une forme annulaire.
